# EUROPEAN PATENT SPECIFICATION

(11) **EP 0 548 889 B1**
(45) Date of publication and mention of the grant of the patent: **13.03.1996**
(21) Application number: 92121724.6
(22) Date of filing: 21.12.1992
(51) Int. Cl.: C10J 3/10, C10J 3/46, C10J 3/48

(54) **Solar energy gasification of solid carbonaceous material in liquid dispersion**
Vergasung mit Sonnenenergie von festem Kohlenstoff enthaltendem Material in Dispersion in einer Flüssigkeit
Gazéification par énergie solaire de matériau carbonacé solide en dispersion dans un liquide

(30) Priority: 26.12.1991 IL 100520
(43) Date of publication of application: 30.06.1993
(73) Proprietor: YEDA RESEARCH AND DEVELOPMENT CO. LTD., Rehovot 76100 (IL)
(72) Inventor: Epstein, Michael, Rishon-LeZion 75208 (IL)
(74) Representative: Grünecker, Kinkeldey, Stockmair & Schwanhäusser Anwaltssozietät

(56) References cited:
- US-A- 4 059 416
- US-A- 4 403 601
- US-A- 4 455 153
- US-A- 4 773 918

## Description

### FIELD OF THE INVENTION

The present invention concerns a process of gasification of solid carbonaceous materials, e.g, coal, dispersed in liquid media. The main product of this process is so-called synthesis gas also known as syngas. Synthesis gas which contains hydrogen and carbon monoxide, is a valuable feedstock for the petrochemical industry serving for the production of a variety of products such as methanol, synthetic fuels, fuel additives and the like.

### BACKGROUND OF THE INVENTION AND PRIOR ART

Conventionally coal gasification is based on the reaction of coal, steam and oxygen (or air) to form a gaseous product composed mainly of carbon monoxide and hydrogen. In this reaction about half the amount of the feed carbon is consumed by burning in order to provide the energy required for the gasification of the other half. The burning is brought about by feeding oxygen or air to the coal bed.

Similar processes for the production of synthesis gas by the gasification of oil shales and methane have also been reported.

It has already been suggested to use concentrated solar energy as the heat source for the production of synthesis gas by the pyrolysis of carbonaceous material such as coal, oil shales and waste polymers. Use of this source of energy has the advantage that no combustion is required and consequently virtually all the carbonaceous material fed into the process is pyrolised. Additionally, due to the fact that no combustion occurs the process is environmentally clean.

Thus I. Bjerie et al., Ind. Eng. Chem. Process Des. Dev. 19 (1980), 345, D.W. Gregg et al., Lawrence Livermore Laboratory Report UCRL-52930 May 1980 and W. Kaminsky et al., Ger. Chem. Eng., 6 (1983) 306, have all reported the gasification of oil shale with various degrees of success.

D.W. Gregg et al., Solar Energy 25 (1980), 353, reported the solar energy gasification of coal in a 23 Kw solar furnace. According to that report, a fixed bed of coal within the reactor fitted with a silica glass window was illuminated by concentrated solar light penetrating through the window. Steam or CO₂ was passed through the bed and reacted endothermally with the coal.

R.W. Taylor et al., Solar Energy 30, (1983), 513 and W.H. Beattie et al., Solar Energy, 31 (1983), 137, reported experiments for coal gasification in a small reactor fitted with a quartz window. In fixed bed experiments the decomposition temperature produced by the concentrated solar radiation were about 1800°-2500°C. Only about 50 percent of the coal was volatilised yielding a mixture of H₂, H₂O, CH₄, CO₂, C₂H₄ and C₂H₆. Similar results were obtained with other carbonaceous materials such as charcoal, wood and paper.

In fluidized bed experiments the decomposition temperatures were about 750-1000°C and here too yields were unsatisfactory.

A different, indirect system of solar coal gasification was proposed by A.P. Bruckner, Solar Energy, 34 (1985), 239. As reported there, a feed gas (steam or CO₂) was heated to temperatures above 1200°C in direct heat exchange with slag droplets melted in a central solar heater. The so-heated feed gas was then reacted with pulverized coal in conventional reactors. Thermal storage was provided by a refractory-lined, insulated vessel, containing solar-molten slag which could be used during the night.

In a very recent work by S.B. Lalvani et al, Energy and Fuels, 5 (1991), 347, it was shown that if coal is mixed with lignin there results a synergistic effect which enchances the solar energy gasification.

While all these reported processes for the production of synthesis gas from carbonaceous starting material with the use of solar energy are ecologically superior to the conventional processes in that no burning takes place and accordingly no combustion gasses are delivered to the atmosphere, and while they have the further advantage of yielding a product of higher energetic content, they are still unsatisfactory yield-wise in that significant fractions of the carbonaceous material fed into the process are not pyrolized.

A further drawback of all reported methods for the pyrolysis of carbonaceous material with concentrated solar energy is that they are all batch processes.

It is accordingly the object of the present invention to provide a new improved process for the production of synthesis gas from carbonaceous material by solar gasification.

### SUMMARY OF THE INVENTION

In accordance with the present invention there is provided a gasification process for the production of synthesis gas from carbonaceous material using solar energy, comprising:
producing a liquid dispersion of particulate carbonaceous material;
providing a solar gasifier reactor with top and bottom regions adapted for the admission of highly concentrated solar radiation;
associating said solar gasifier reactor with a system for the high concentration of solar radiation adapted to produce an elongated, high-temperature focal zone within the reactor;
continuously injecting said dispersion into said top region of said solar gasifier reactor in the form of droplets or discrete jets and allowing the so injected dispersion to sink therein by gravity across said elongated focal zone; and
continuously exhausting product synthesis gas from said top region.

The reactor may be made entirely of a transparent material capable of withstanding concentrated, high temperature solar radiation, or else be fitted with a window made of such material.

If desired, any non-reacted carbonaceous material arriving at the bottom region of the reactor is recycled.

Also if desired, the residence time of the droplets within the reactor may be controlled by a counter current gas flow produced by forcibly injecting into the bottom region of the reactor a suitable gas stream, e.g. of steam or carbon dioxide. By controlling such gas flow the residence time of the individual carbonaceous material particles within the reactor may be adjusted according to requirements. A counter-current gas stream has the further beneficial effect of cleaning the inner wall surface of the reactor so that the wall portion dedicated to the admission of the concentrated solar radiation, is maintained clean and fully transparent.

A variety of carbonaceous materials may be used in the process according to the invention such as, for example, various types of native coal, charcoal, oil shales, various biomasses, waste polymeric materials and the like. Depending on the nature of the raw material used for the process, the product synthesis gas may, in addition to hydrogen and carbon monoxide, also contain a variety of low molecular paraffins and olefins.

Typically, the liquid used for making the dispersion of carbonaceous material which is injected into the reactor is water.

The injection of the carbonaceous material dispersion into the top region of the reactor is performed in such a way that the injected dispersion disintegrates into a shower or cloud of small droplets or into an array of discrete jets, whereby the interaction between each particle and the impinging concentrated solar radiation is maximized. This is achieved by using suitably designed nozzles which may be simple holes or cylindrical or conical tubular bodies.

In the course of operation the solid carbonaceous material particles inside the liquid drops absorb the light and are heated very rapidly to a high temperature. The bulk of the liquid surrounding the particles remains practically cold except for a thin film that envelopes the particles. This liquid film is evaporated and interacts with the solid particles to produce the synthesis gas.

The product synthesis gas exhausted from the top region of the reactor is preferably passed through a separation device such as a cyclone, to separate unreacted particles or droplets of liquid.

The invention further provides in an installation for the production of synthesis gas from carbonaceous material comprising a system for the high concentration of solar energy into a high-temperature elongated focal zone,
a solar gasifier reactor with top and bottom regions and having at least a transparent portion capable of transmitting highly concentrated solar radiation;
means for enabling the projection of said high-temperature elongated focal zone into the reactor;
nozzle means at the top region of the reactor;
means for the injection of a dispersion of particulate carbonaceous material into the reactor via said nozzle means; and
exhaust means for withdrawing product synthesis gas from the top region of the reactor.

The said means for the injection of a dispersion of particulate carbonaceous material into the reactor via said nozzle means may be suitable pumping means such as a pressurising mud pump. Alternatively, an overhead tank may be provided from which the dispersion flows by gravity into the reactor via said nozzle means. Preferably such an overhead tank is of the constant-head type.

Preferably, the bottom region of the reactor according to the invention is fitted with means for the injection of a suitable gas such as for example, steam or carbon dioxide, to produce a gas flow in counter-current to the gravity flow of the droplets or jets of the liquid dispersion of carbonaceous material, whereby the residence time of the carbonaceous particles in the reactor is judiciously controlled.

If desired, the reactor according to the invention may be associated with means for recycling unreacted carbonaceous material accumulating at the bottom region of the reactor.

Preferably, separator means such as, for example, a cyclone are associated with the product gas exhaustion means so as to separate therefrom any entrapped liquid or solid material.

### DESCRIPTION OF THE DRAWINGS

For better understanding the invention will now be described with reference to the next drawings in which:
Fig. 1 is a layout of an installation according to the invention; and
Fig. 2 is a diagrammatic section across the reactor in Fig. 1 also showing part of the solar energy concentrating system.

### DESCRIPTION OF A SPECIFIC EMBODIMENT

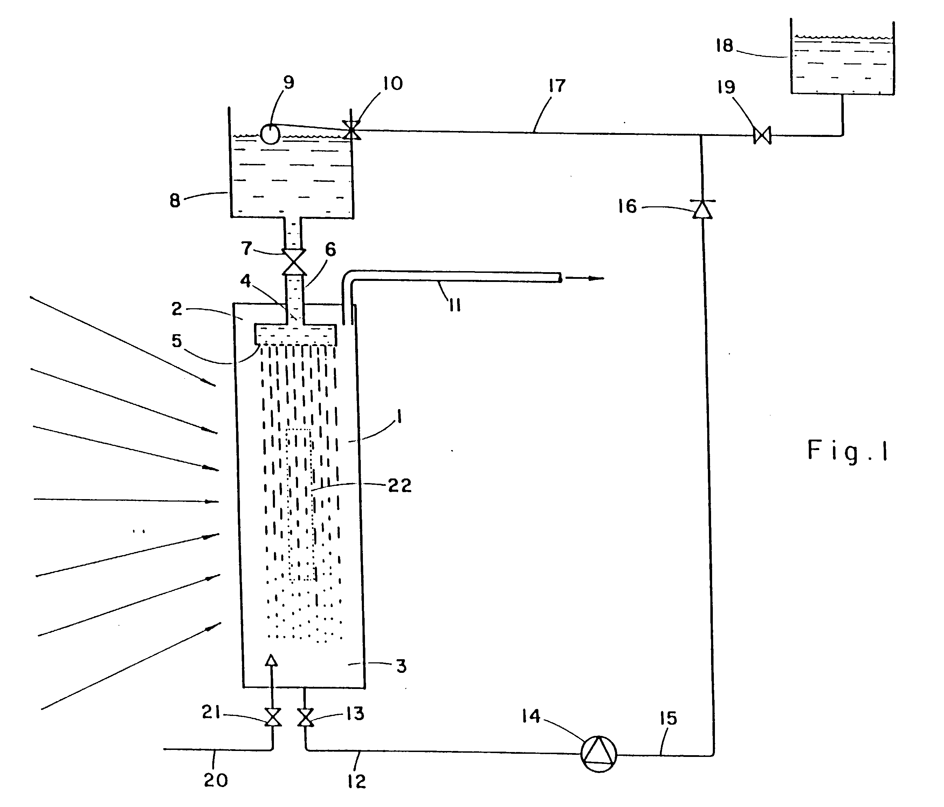

The embodiment of the installation according to the invention shown in Fig. 1 comprises a tubular quartz reactor 1 having top and bottom regions 2 and 3. At the top end region 2 reactor 1 is fitted with a sprayer head 4 comprising a plurality of nozzles 5 and having a neck portion 6 fitted with a control valve 7 leading to an overhead constant head tank 8 fitted with a float 9 controlling an inlet valve 10. Neck portion 6 may be slidable or else telescopic whereby the level of sprayer head 4 is adjustable.

The top region 2 of reactor 1 is further fitted with an exhaust pipe 11 for the withdrawal of the product synthesis gas.

From the bottom region 3 of the tubular reactor 1 there extends a duct 12 fitted with a control valve 13 leading to a recycling pump 14 from where another duct 15 fitted with a non-return valve 16 connects to duct 17 which is fitted with a control valve 19 and links a reservoir 18 of a liquid dispersion of carbonaceous material with the constant-head tank 8 via the float-controlled inlet valve 10.

A duct 20 fitted with a control valve 21 leads into the bottom region 3 of reactor 1 and serves for the injection of a gas such as carbon dioxide or steam.

In operation reactor 1 is associated with a solar radiation high concentration system which has a focal zone 22 that is projected into the reactor as shown by way of dotted lines in Fig. 1.

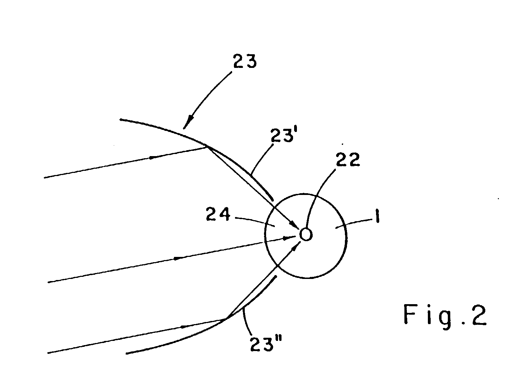

The association of reactor 1 with a solar energy high concentration system is diagramatically shown in Fig. 2. As shown, a secondary concentrator 23 having an essentially vertical opening 24, is mounted near reactor 1 in such a fashion that the two wings 23' and 23'' of the secondary concentrator 23 flank the reactor 1 so that the focal zone 22 is situated in the central portion of the reactor in a region between the top and bottom regions 2 and 3.

The nozzles 5 of spray head 4 may for example be holes of 1.0-1.6 mm in diameter and suitable distanced from each other, e.g. by a distance of 5 mm between the centers of the holes so as to ensure an essentially even energy absorption by all particles. The nozzles 5 may be designed to produce individual droplet or discrete jets.

The height of the liquid phase in the constant-head tank may be controlled by suitable adjustment of valve 10. This height determines the head at which the liquid dispersion of the particulate carbonaceous material is sprayed into reactor 1 via nozzles 5.

For the performance of the process according to the invention the carbonaceous material serving as starting material has to be suitably comminuted, e.g. by grinding, so as to produce small particles whose diameter is preferably only a fraction of a millimetre.

For operation, valves 19,7 and 13 are opened whereupon the liquid dispersion is injected or sprayed into reactor 1 at constant head. The injected liquid phase forms either droplets or discrete jets which proceed by gravity towards the bottom region 3, passing on their way through the focal zone 22 of the secondary concentrator 23. The solid particles inside the liquid drops absorb the impinging concentrated solar radiation and are heated very rapidly to a high temperature. The bulk of the liquid surrounding the particles remains practically cold except for a thin film that envelopes the particles. This liquid film is evaporated as the vapour reacts with the solid particles and gassifies them which in case of coal leads to the formation of a synthesis gas consisting essentially of carbon monoxide and hydrogen.

If desired, gas such as steam or carbon dioxide is injected into bottom region 3 of reactor 1 via duct 20, the intensity of the injected gas being controllable by means of valve 21. Inside reactor 1 the injected gas flows counter-currently to the downflowing droplets or jets of liquid dispersion injected at the top whereby the residence time of the solid particles in the reactor is increased, the desired residence time being achieved by a judicious adjustment of valve 21. The counter-current flowing gas also keeps the inner surface of the reactor walls clean whereby unimpeded penetration of the concentrated solar radiation is ensured.

The product synthesis gas withdrawn through exhaust pipe 11 will, as a rule, be subjected to various treatments before being charged into a suitable gasometer, such as separation of residual liquid and solid particles e.g., by way of cyclone, and if desired, also cooling.

In an experimental installation of the kind shown in Fig. 1 reactor 1 was 1 meter long and 60 mm in diameter and was placed on a moving platform adjustable both vertically and horizontally in order to ensure that the focal zone 22 remains within the central region of the reactor during all hours of the day. The nozzles 5 in spray head 4 were 1.0-1.5 mm in diameter and the distance between the centers of adjacent nozzles was 5 mm. The position of head 4 within tube 1 was adjusted by moving head 4 up and down, thereby adjusting the speed of the drops or jets passing through the focal zone 22. In addition, the height of the liquid in the constant head tank 8 was also adjusted by suitable adjustment of the float-controlled inlet valve 10. Typical flow rates per nozzle were of the order of 50-150cc/min.

The performance of the reactor depends on the residence time of each particle in the focal zone 22 and this is adjustable to optimal values by a counter current gas flow resulting from gas injection through duct 20. Depending on the size of the focal zone 22, the residence time can be adjusted within the range from a fraction of a second, say 1/10-1/5 second, to a few seconds.

In the above described experimental installation the liquid dispersion of particulate carbonaceous material, e.g. a coal powder slurry can be prepared within the reservoir tank 18 by means of a suitable blender.

In a commercial plant a liquid dispersion of particulate carbonaceous material, e.g. a coal powder slurry in water, can be prepared in a remote place not necessarily close to the solar site. The preparation of the slurry is done by mixing dry coal from a grinding mill with water. The slurry in the tank is kept in circulation through a pipe loop to avoid separation of solids, e.g. by means of a conventional, low pressure reciprocating pump. For operation the slurry is pumped to the solar site using a pressurising mud pump. The slurry can be fed directly to the solar gassifier or to a head tank. Typically, a commercial plant will be designed to process 30 tons of coal per hour or 300 tons per hour of a 10 percent w/w slurry.

The solid weight content of the liquid dispersion depends on the type of carbonaceous material and on the kind of liquid. The amount of coal in water can be varied within the range of from 1% to 50% and typically 20-25% w/w slurries are used.

Experience shows that in accordance with the invention most of the carbonaceous material introduced into the process is gassified and the method can be operated continuously practically from sunrise to sunset.

## Claims

1. A gasification process for the production of synthesis gas using solar energy, comprising:
producing a liquid dispersion of particulate carbonaceous material;
providing a solar gasifier reactor with top and bottom regions adapted for the admission of highly concentrated solar radiation;
associating said solar gasifier reactor with a system for the high concentration of solar radiation adapted to produce an elongated, high-temperature focal zone within the reactor;
continuously injecting said dispersion into said top region of said solar gasifier reactor in the form of droplets or discrete jets and allowing the so injected dispersion to sink therein by gravity across said elongated focal zone; and
continuously exhausting product synthetic gas from said top region.

2. A process according to Claim 1, comprising recycling non-reacted carbonaceous material from the bottom region of the reactor.

3. A process according to Claim 1 or 2, comprising injecting a gas into the bottom region of the reactor to produce inside the reactor a gas flow in counter-current to the sinking particulate carbonaceous material, thereby controlling the residence time of the latter in the reactor.

4. A process according to any one of Claims 1 to 3, wherein the carbonaceous material is selected from the group of native coal, charcoal, oil shales, biomasses and waste polymeric materials.

5. A process according to any one of Claims 1 to 4, wherein the liquid used for making said liquid dispersion is water.

6. In an installation for the production of synthesis gas from carbonaceous material comprising a system for the high concentration of solar energy into a high-temperature elongated focal zone,
a solar gasifier reactor with top and bottom regions and having at least a transparent portion capable of transmitting highly concentrated solar radiation;
means for enabling the projection of said high-temperature elongated focal zone into the reactor;
nozzle means at the top region of the reactor;
means for the injection of a dispersion of particulate carbonaceous material into the reactor via said nozzle means; and
exhaust means for withdrawing product synthesis gas from the top region of the reactor.

7. A reactor according to Claim 6, wherein said means for the injection of said dispersion of particulate carbonaceous material are pumping means.

8. A reactor according to Claim 6, wherein said means for the injection of said dispersion of particulate carbonaceous material is an overhead tank.

9. A reactor according to Claim 8, wherein said overhead tank is of the constant-head type.

10. A reactor according to any one of Claims 6 to 9, comprising means for gas injection into the reactor's bottom region.

11. A reactor according to any one of Claims 6 to 10, associated with means for recycling carbonaceous material accumulating at the reactor's bottom region.

12. A reactor according to any one of Claims 6 to 11, wherein said exhaust means are associated with separator means whereby entrapped solid liquid matter is removed from the product synthesis gas.

## Patentansprüche

1. Vergasungsverfahren zur Herstellung von Synthesegas unter Verwendung von Sonnenenergie, bei dem
- eine Dispersionsflüssigkeit mit aus Partikeln bestehendem kohlenstoffhaltigem Material hergestellt wird;
- ein solarer Vergasungsreaktor mit einem oberen und einem unteren, für den Einlaß von stark gebündelter Sonnenstrahlung angepaßten Bereich bereitgestellt wird;
- dem solaren Vergasungsreaktor ein für die stark gebündelte Sonnenstrahlung angepaßtes System zur Ausbildung einer länglichen Hochtemperatur-Brennpunktzone innerhalb des Reaktors zugeordnet wird;
- die Dispersion in Form von Tropfen bzw. diskreten Flüssigkeitsstrahlen kontinuierlich in den oberen Bereich des solaren Vergasungsreaktors eingespritzt wird und die Dispersion in dem solaren Reaktor entlang der länglichen Brennpunktzone durch die Schwerkraft abgesenkt wird und
- erzeugtes Synthesegas aus dem oberen Bereich kontinuierlich abgezogen wird.

2. Verfahren nach Anspruch 1, **dadurch gekennzeichnet**, daß nicht reagiertes, kohlenstoffhaltiges Material von dem Bodenbereich des Reaktors zurückgeführt wird.

3. Verfahren nach Anspruch 1 oder 2, **dadurch gekennzeichnet**, daß in den Bodenbereich des Reaktors ein Gas eingespritzt wird, das in dem Reaktor einen Gas-Gegenstrom zu dem absinkenden, aus Partikeln bestehenden, kohlenstoffhaltigen Material erzeugt, durch den dessen Verweilzeit in dem Reaktor geregelt wird.

4. Verfahren nach einem der Ansprüche 1 bis 3, **dadurch gekennzeichnet**, daß das kohlenstoffhaltige Material aus der Gruppe, bestehend aus Kohle, Holzkohle, Ölschiefer, Biomasse und Polymerabfällen, ausgewählt wird.

5. Verfahren nach einem der Ansprüche 1 bis 4, **dadurch gekennzeichnet**, daß als Flüssigkeit zur Herstellung der Dispersion Wasser verwendet wird.

6. Verfahren zur Herstellung von Synthesegas aus einem kohlenstoffhaltigen Material mit einem System zur starken Bündelung von Sonnenenergie in einer länglichen Hochtemperatur-Brennpunktzone,
- einem solaren Vergasungsreaktor mit einem oberen und einem unteren Bereich, der wenigstens einen transparenten, zum Durchlaß von gebündelter Sonnenstrahlung geeigneten Bereich aufweist;
- einem Mittel, mit dem die Hochtemperatur-Brennpunktzone in den Reaktor projizierbar ist;
- einem Düsemittel im oberen Bereich des Reaktors;
- einem Mittel zum Einspritzen einer Dispersion mit aus Partikeln bestehendem, kohlenstoffhaltigem Material über das Düsemittel in den Reaktor und
- einem Auslaß zum Ableiten des Synthesegases aus dem oberen Bereich des Reaktors.

7. Reaktor nach Anspruch 6, **dadurch gekennzeichnet**, daß das Mittel zum Einspritzen der Dispersion mit aus Partikeln bestehendem, kohlenstoffhaltigem Material durch eine Pumpe gebildet ist.

8. Reaktor nach Anspruch 6, **dadurch gekennzeichnet**, daß das Mittel zum Einspritzen der Dispersion mit aus Partikeln bestehendem, kohlenstoffhaltigem Material durch einen Hochbehälter gebildet ist.

9. Reaktor nach Anspruch 8, **dadurch gekennzeichnet**, daß der Hochbehälter ein Behälter mit konstantem Füllstand ist.

10. Reaktor nach einem der Ansprüche 6 bis 9, **dadurch gekennzeichnet**, daß Mittel zum Einspritzen von Gas in den Bodenbereich des Reaktors ausgebildet sind.

11. Reaktor nach einem der Ansprüche 6 bis 10, **dadurch gekennzeichnet**, daß Mittel zum Zurückführen des an dem Bodenbereich des Reaktors angesammelten kohlenstoffhaltigen Materials zugeordnet sind.

12. Reaktor nach einem der Ansprüche 6 bis 11, **dadurch gekennzeichnet**, daß dem Auslaß ein Separator zugeordnet ist, durch den mitgeführte Fest- und Flüssigstoffe aus dem Gas entfernt werden.

## Revendications

1. Procédé de gazéification pour la production d'un gaz de synthèse en utilisant l'énergie solaire, consistant à :
préparer une dispersion liquide de matière carbonacée particulaire ;
fournir un réacteur gazéificateur solaire avec les régions supérieure et inférieure adaptées pour l'introduction d'une radiation solaire hautement concentrée ;
associer ledit réacteur gazéificateur solaire avec un système pour la haute concentration d'une radiation solaire adapté pour produire une zone focale allongée haute température dans le réacteur ;
injecter en continu ladite dispersion dans ladite région supérieure dudit réacteur gazéificateur solaire, sous la forme de gouttelettes ou de jets discrets, et laisser la dispersion ainsi injectée s'y déposer par gravité au travers de ladite zone focale allongée ; et
évacuer en continu le gaz de synthèse produit de ladite région supérieure.

2. Procédé selon la revendication 1, comprenant le recyclage d'une matière carbonacée n'ayant pas réagi, depuis la région inférieure du réacteur.

3. Procédé selon la revendication 1 ou 2, comprenant l'injection d'un gaz dans la région inférieure du réacteur pour produire dans le réacteur un flux de gaz à contre-courant par rapport à la matière carbonacée particulaire se déposant, contrôlant ainsi le temps de séjour de celle-ci dans le réacteur.

4. Procédé selon l'une quelconque des revendications 1 à 3, dans lequel la matière carbonacée est choisie dans le groupe du charbon natif, du charbon, des schistes bitumineux, des biomasses et des matières polymères résiduaires.

5. Procédé selon l'une quelconque des revendications 1 à 4, dans lequel le liquide utilisé pour préparer ladite dispersion liquide est l'eau.

6. Installation pour la production d'un gaz de synthèse à partir d'une matière carbonacée, comprenant un système pour la haute concentration d'énergie solaire dans une zone focale allongée haute température,
un réacteur gazéificateur solaire avec des régions supérieure et inférieure, et ayant au moins une partie transparente capable de transmettre une radiation solaire hautement concentrée ;
des moyens pour permettre la projection de ladite zone focale allongée haute température dans le réacteur ;
des moyens de buse à la région supérieure du réacteur ;
des moyens pour l'injection d'une dispersion de matière carbonacée particulaire dans le réacteur par lesdits moyens de buse ; et
des moyens d'échappement pour soutirer le gaz de synthèse produit de la région supérieure du réacteur.

7. Réacteur selon la revendication 6, dans lequel lesdits moyens pour l'injection de ladite dispersion de matière carbonacée particulaire sont des moyens de pompage.

8. Réacteur selon la revendication 6, dans lequel lesdits moyens pour l'injection de ladite dispersion de matière carbonacée particulaire est un réservoir du dessus.

9. Réacteur selon la revendication 8, dans lequel ledit réservoir du dessus est du type à niveau constant.

10. Réacteur selon l'une quelconque des revendications 6 à 9, comprenant des moyens pour l'injection de gaz dans la région inférieure du réacteur.

11. Réacteur selon l'une quelconque des revendications 6 à 10, associé avec des moyens pour recycler une matière carbonacée s'accumulant à la région inférieure du réacteur.

12. Réacteur selon l'une quelconque des revendications 6 à 11, dans lequel lesdits moyens d'échappement sont associés avec des moyens séparateurs, de sorte qu'une matière solide liquide piégée est éliminée du gaz de synthèse produit.
